# FASCICULE DE BREVET EUROPEEN

(11) **EP 3 181 651 B1**
(45) Date de publication et mention de la délivrance du brevet: **06.02.2019**
(21) Numéro de dépôt: 15201235.7
(22) Date de dépôt: 18.12.2015
(51) Int. Cl.: C09J 201/02, C09J 153/00, G04B 29/02, G04B 29/04

(54) **ENSEMBLE DE PIÈCES HORLOGÈRES ASSEMBLÉES PAR ADHÉSIF REPOSITIONNABLE À CHAUD ET PROCÉDÉ D'ASSEMBLAGE ET DE REPOSITIONNEMENT DE TELLES PIÈCES**
ANORDNUNG VON UHRENTEILEN, DIE MIT EINEM REPOSITIONIERBAREN HEISSSCHMELZKLEBER ZUSAMMENGEFÜGT SIND, UND VERFAHREN ZUM ZUSAMMENFÜGEN UND REPOSITIONIEREN DIESER TEILE
SET OF CLOCKMAKING PARTS ASSEMBLED BY HOT-REPOSITIONABLE ADHESIVE AND METHOD FOR ASSEMBLING AND REPOSITIONING SUCH PARTS

(43) Date de publication de la demande: 21.06.2017
(73) Titulaire: The Swatch Group Research and Development Ltd., 2074 Marin (CH)
(72) Inventeur: Rannoux, Claire, 1003 Lausanne (CH); Fernandez Ciurleo, Maria, 2114 Fleurier (CH)
(74) Mandataire: ICB SA

(56) Documents cités:
- WO-A2-2011/112447
- US-A1- 2012 309 895
- JING BAI ET AL: "Dynamic crosslinked poly(styrene-block-butadiene-block-styrene ) via Diels-Alder chemistry: an ideal method to improve solvent resistance and mechanical properties without losing its thermal plastic behavior", RSC ADVANCES: AN INTERNATIONAL JOURNAL TO FURTHER THE CHEMICAL SCIENCES, vol. 5, no. 56, 1 janvier 2015 (2015-01-01), pages 45376-45383, XP055276409, GB ISSN: 2046-2069, DOI: 10.1039/C5RA08719H & JING BAI ET AL: "Dynamic crosslinked poly(styrene-block-butadiene-block-styrene ) via Diels-Alder chemistry: an ideal method to improve solvent resistance and mechanical properties without losing its thermal plastic behavior", RSC ADVANCES: AN INTERNATIONAL JOURNAL TO FURTHER THE CHEMICAL SCIENCES, vol. 5, no. 56, 1 janvier 2015 (2015-01-01), pages 45376-45383, XP055276411, GB ISSN: 2046-2069, DOI: 10.1039/C5RA08719H

## Description

### Domaine de l'invention

La présente invention se rapporte au domaine de la mécanique et notamment au domaine de l'horlogerie ou de la bijouterie. Elle concerne plus particulièrement un ensemble d'au moins deux pièces horlogères assemblées entre elles au moyen d'un adhésif repositionnable à chaud pour permettre un repositionnement des pièces horlogères lorsque ledit adhésif est chauffé. Elle concerne également un procédé d'assemblage et de repositionnement de telles pièces horlogères.

### Arrière-plan de l'invention

Dans le domaine de l'horlogerie, des pièces horlogères sont assemblées entre elles au moyen d'une colle ou d'un adhésif. Les points de collage doivent être réalisés au moyen d'un adhésif repositionnable à chaud pour pouvoir être retravaillés à chaud par une opération manuelle et repositionner les pièces collées de manière optimale, soit lors du montage, soit lors de l'entretien ou de la réparation des pièces en service après-vente. De plus, cet adhésif doit également présenter une résistance aux lavages chimiques, notamment afin de résister aux lavages horlogers effectués lors du service après-vente.

A titre d'exemple, les palettes en rubis sont fixées sur l'ancre par collage, généralement au moyen d'une gomme-laque. La gomme-laque est une résine naturelle, qui est thermofusible, c'est-à-dire qu'elle est mielleuse à des températures supérieures à sa température de fusion (Tf) et solide en dessous de sa température de fusion (Tf) ou de sa température de transition vitreuse (Tg). Ainsi, la gomme-laque peut être ramollie à chaud par un opérateur de manière à pouvoir déplacer de quelques microns les palettes sur l'ancre. Toutefois, comme tout composé thermo-fusible, la gomme-laque est soluble dans les solvants. Les pièces assemblées par gomme-laque présentent donc une mauvaise résistance aux lavages horlogers.

Un autre exemple concerne le spiral collé sur son piton au moyen de colles thermodurcissables, type résine Epikote™. Les colles thermodurcissables présentent une bonne résistance chimique. Toutefois, elles ne peuvent pas être retravaillées à chaud de sorte que les pièces assemblées par les colles thermodurcissables ne peuvent pas être séparées et repositionnées si cela s'avère nécessaire.

Le document WO 2011/112447 A2 décrit un ensemble d'affichage dans lequel un premier et un second substrat sont stratifiés avec un adhésif choisi dans le groupe des adhésifs thermoréversibles réticulables. Le module d'affichage peut faire partie d'une horloge. Les réticulations réversibles peuvent être formées par refroidissement, par réticulation physique ou ionomère grâce à la séparation de phases de segments polymères dans un copolymère séquencé ayant une température de transition vitreuse plus élevée.

Le document US 2012/309895 A1 décrit un adhésif à réticulation réversible. Les réticulations se produisent à température ambiante et se défont à une température plus élevée, ce qui permet de séparer à nouveau les deux substrats collés à l'origine. La composition comprend au moins deux composants différents A et B, la réticulation par réaction Diels-Alder ou hétéro-Diels-Alder à température ambiante et l'annulation des réticulations par une réaction rétro-Diels-Alder ou rétro-hétéro-Diels-Alder. Le composant A comprend un diénophile comprenant une double liaison carbone-soufre et le composant B comprend un polymère di-fonctionnel préparé par ATRP et ayant des fonctionnalités diéniques aux extrémités.

L'article "Dynamic crosslinked poly(styrene-block-butadiene-block-styrene) via Diels-Alder chemistry: an ideal method to improve solvent resistance and mechanical properties without losing its thermal plastic behavior", RCS Advances: An International Journal to Further The Chemical Sciences, vol. 5, no. 56, 1 January 2015 (2015-01-01), GB, pages 45376 - 4538, décrit un mélange comprenant un copolymère séquencé comprenant un bloc poly(styrène-bloc-butadiène-butadiène-bloc utilisé comme élastomère thermoplastique, dans lequel le bloc butadiène est fonctionnalisé avec des groupes pendants furanne (diénophile) ainsi qu'un agent de couplage ayant des groupes terminaux bismaléimide, capables de réagir avec les groupes furanne par réaction Diels-Alder.

### Résumé de l'invention

L'invention a notamment pour objectif de pallier les différents inconvénients des colles connues utilisées jusqu'à présent pour assembler des pièces horlogères.

Plus précisément, un objectif de l'invention est de fournir un adhésif qui permette d'obtenir un ensemble de pièces horlogères qui puisse être retravaillé à chaud pour pouvoir repositionner lesdites pièces horlogères tout en présentant une résistance appropriée aux lavages horlogers.

A cet effet, la présente invention concerne un ensemble d'au moins deux pièces horlogères assemblées entre elles au moyen d'un adhésif lorsque ledit adhésif est à une température T_{A} et pouvant être repositionnées l'une par rapport à l'autre lorsque ledit adhésif est chauffé à une température T_{C}.

Selon l'invention, ledit adhésif comprend au moins une formulation se présentant :
- à la température T_{C} sous la forme d'un mélange de chaines polymères comprenant au moins des unités pendantes diènes X et de molécules de couplage comprenant au moins deux groupements terminaux diénophiles Y, lesdites unités X et lesdits groupements Y étant agencés pour pouvoir réagir entre eux et se lier par réaction de Diels-Alder à une température T_{DA} et pour pouvoir se régénérer par réaction de rétro-Diels-Alder à une température T_{RDA},
- à une température T_{A} sous la forme d'un réseau tridimensionnel dans lequel les chaines polymères sont reliées entre elles par les molécules de couplage par réaction de Diels-Alder,
   où T_{A} < T_{RDA} ≤ T_{C}
   où la température T_{DA} est comprise entre 0°C et 100°C, préférentiellement entre 25°C et 70°C, et la température T_{RDA} est comprise entre 50°C et 200°C, préférentiellement entre 80°C et 150°C, T_{DA} étant strictement inférieure à T_{RDA}.

La présente invention concerne également un procédé d'assemblage et de repositionnement d'au moins deux pièces horlogères au moyen d'un adhésif repositionnable à chaud, lesdites pièces horlogères étant maintenues assemblées entre elles lorsque ledit adhésif est à une température T_{A} et pouvant être repositionnées l'une par rapport à l'autre lorsque ledit adhésif est chauffé à une température T_{C}, comprenant les étapes de :
a) préparer une solution d'un adhésif comprenant au moins une formulation se présentant sous la forme d'un mélange de chaines polymères comprenant au moins des unités pendantes diènes X et de molécules de couplage comprenant au moins deux groupements terminaux diénophiles Y, lesdites unités X et lesdits groupements Y étant agencés pour pouvoir réagir entre eux et se lier par réaction de Diels-Alder à une température T_{DA} et pour pouvoir se régénérer par réaction de rétro-Diels-Alder à une température T_{RDA},
   où T_{A} < T_{RDA} ≤ T_{C}, la température T_{DA} étant comprise entre 0°C et 100°C, préférentiellement entre 25°C et 70°C, et la température T_{RDA} étant comprise entre 50°C et 200°C, préférentiellement entre 80°C et 150°C, T_{DA} étant strictement inférieure à T_{RDA}
b) appliquer la solution dudit adhésif sur les pièces horlogères
c) sécher
d) placer les pièces horlogères à une température supérieure ou égale à la température T_{DA} et inférieure à T_{RDA} pour relier les chaines polymères entre elles au moyen des molécules de couplage par réaction de Diels-Alder de sorte que l'adhésif est sous la forme d'un réseau tridimensionnel
e) chauffer les pièces horlogères à la température T_{C} pour régénérer le mélange de chaines polymères et de molécules de couplage par réaction de rétro-Diels-Alder
f) repositionner les pièces horlogères
g) refroidir les pièces horlogères à une température supérieure ou égale à la température T_{DA} et inférieure à T_{RDA} pour relier à nouveau les chaines polymères entre elles au moyen des molécules de couplage par réaction de Diels-Alder de sorte que l'adhésif est à nouveau sous la forme d'un réseau tridimensionnel,
h) éventuellement répéter les étapes e) à g) autant de fois que nécessaire pour repositionner à nouveau les pièces horlogères.

La présente invention concerne également un procédé d'assemblage est de repositionnement d'au moins deux pièces horlogères au moyen d'un adhésif repositionnable à chaud, lesdites pièces horlogères étant maintenues assemblées entre elles lorsque ledit adhésif est à une température T_{A} et pouvant être repositionnées l'une par rapport à l'autre lorsque ledit adhésif est chauffé à une température T_{C}, comprenant les étapes de :
a) préparer une solution d'un adhésif comprenant au moins une formulation se présentant sous la forme d'un mélange de chaines copolymères blocs comprenant au moins un premier bloc polymère présentant une température de transition vitreuse Tg ou une température de fusion Tf comprise entre 40°C et 200°C, et au moins un deuxième bloc polymère comprenant au moins des unités pendantes diènes X et présentant une température de transition vitreuse Tg ou une température de fusion Tf inférieure à T_{DA}, et de molécules de couplage comprenant au moins deux groupements terminaux diénophiles Y, lesdites unités X et lesdits groupements Y étant agencés pour pouvoir réagir entre eux et se lier par réaction de Diels-Aider à une température T_{DA} et pour pouvoir se régénérer par réaction de rétro-Diels-Alder à une température T_{RDA},
   où T_{A} < T_{RDA} ≤ T_{C}, la température T_{DA} étant comprise entre 0°C et 100°C, préférentiellement entre 25°C et 70°C, la température T_{RDA} étant comprise entre 50°C et 200°C, préférentiellement entre 80°C et 150°C, T_{DA} étant strictement inférieure à T_{RDA}, et la température T_{C} étant supérieure à la température de transition vitreuse Tg ou à la température de fusion Tf du premier bloc polymère,
b) appliquer la solution dudit adhésif sur les pièces horlogères
c) sécher
d) placer les pièces horlogères à une température supérieure ou égale à la température de transition vitreuse Tg ou à la température de fusion Tf du premier bloc polymère pour repositionner les pièces horlogères
e) refroidir à une température inférieure ou égale à la température de transition vitreuse Tg ou à la température de fusion Tf du premier bloc polymère,
f) placer les pièces horlogères à une température supérieure ou égale à la température T_{DA} et inférieure à T_{RDA} pour relier les chaines copolymères blocs entre elles au moyen des molécules de couplage par réaction de Diels-Alder de sorte que l'adhésif est sous la forme d'un réseau tridimensionnel
g) chauffer lesdites pièces horlogères à la température T_{C} pour régénérer le mélange de chaines copolymères blocs et de molécules de couplage par réaction de rétro-Diels-Alder
h) repositionner les pièces horlogères
i) reproduire les étapes e) à f)
j) éventuellement répéter les étapes g) à i) autant de fois que nécessaire pour repositionner à nouveau les pièces horlogères.

L'ensemble obtenu peut être travaillé à chaud pour séparer les pièces horlogères et les repositionner et est résistant aux lavages horlogers.

La présente invention concerne également l'utilisation d'un adhésif repositionnable à chaud pour maintenir assemblées entre elles au moins deux pièces horlogères lorsque ledit adhésif est à une température T_{A} et pour les repositionner l'une par rapport à l'autre lorsque ledit adhésif est chauffé à une température T_{C}, ledit adhésif comprenant au moins une formulation se présentant :
- à la température T_{C} sous la forme d'un mélange de chaines polymères comprenant au moins des unités pendantes diènes X et de molécules de couplage comprenant au moins deux groupements terminaux diénophiles Y, lesdites unités X et lesdits groupements Y étant agencés pour pouvoir réagir entre eux et se lier par réaction de Diels-Alder à une température T_{DA} et pour pouvoir se régénérer par réaction de rétro-Diels-Alder à une température T_{RDA},
- à une température T_{A} sous la forme d'un réseau tridimensionnel dans lequel les chaines polymères sont reliées entre elles par les molécules de couplage par réaction de Diels-Alder,
   où T_{A} < T_{RDA} ≤ T_{C}
   où la température T_{DA} est comprise entre 0°C et 100°C, préférentiellement entre 25°C et 70°C, et la température T_{RDA} est comprise entre 50°C et 200°C, préférentiellement entre 80°C et 150°C, T_{DA} étant strictement inférieure à T_{RDA}.

La présente invention concerne également une pièce d'horlogerie comprenant un ensemble de deux pièces horlogères assemblées entre elles au moyen d'un adhésif repositionnable à chaud tel que défini ci-dessus.

### Description détaillée de l'invention

La présente invention concerne un ensemble d'au moins deux pièces horlogères assemblées entre elles au moyen d'un adhésif lorsque ledit adhésif est à une température T_{A} et pouvant être repositionnées l'une par rapport à l'autre lorsque ledit adhésif est chauffé à une température T_{C}.

Les pièces horlogères peuvent être tout élément utilisé dans un mécanisme horloger nécessitant d'être assemblé à un autre élément par collage et de pouvoir être séparé en cas par exemple de service après-vente pour être repositionné de manière optimale. Un ensemble de pièces horlogères est par exemple un ensemble palette en rubis/ancre ou spiral/piton ou index/cadran.

Selon l'invention, l'adhésif utilisé comprend au moins une formulation se présentant :
- à la température T_{C} sous la forme d'un mélange de chaines polymères comprenant au moins des unités pendantes diènes X et de molécules de couplage comprenant au moins deux groupements terminaux diénophiles Y, lesdites unités X et lesdits groupements Y étant agencés pour pouvoir réagir entre eux et se lier par réaction de Diels-Alder à une température T_{DA} et pour pouvoir se régénérer par réaction de rétro-Diels-Alder à une température T_{RDA},
- à une température T_{A} sous la forme d'un réseau tridimensionnel dans lequel les chaines polymères sont reliées entre elles par les molécules de couplage par réaction de Diels-Alder,
   où T_{A} < T_{RDA} ≤ T_{C}
   où la température T_{DA} est comprise entre 0°C et 100°C, préférentiellement entre 25°C et 70°C, et la température T_{RDA} est comprise entre 50°C et 200°C, préférentiellement entre 80°C et 150°C, T_{DA} étant strictement inférieure à T_{RDA}.

Les températures T_{DA} de la réaction de Diels-Alder et T_{RDA} de la réaction de rétro-Diels-Alder dépendent des unités X de la chaine polymère et de la molécule de couplage. Ces derniers sont choisis de sorte que la température T_{DA} de la réaction de Diels-Alder est avantageusement comprise entre 0°C et 100°C, et plus préférentiellement entre 25°C et 70°C, et la température T_{RDA} de la réaction de rétro-Diels-Alder est comprise entre 50°C et 200°C, et plus préférentiellement entre 80°C et 150°C.

D'une manière préférée, les unités pendantes diènes X sont des unités pendantes qui comprennent au moins une fonction diène X, de préférence terminale, et choisie parmi le groupe comprenant le furane, le cyclopentadiène et l'anthracène.

Ainsi, des exemples de monomères particulièrement appropriés pour former une chaine polymère comprenant des unités pendantes diènes X sont :

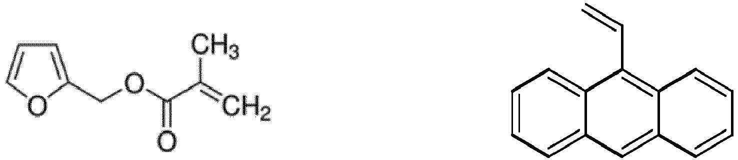

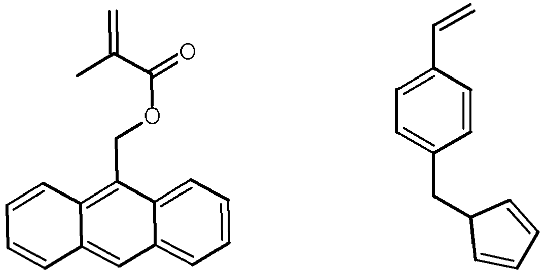

Ces molécules sont disponibles sur le marché ou synthétisable en une étape (synthèse décrite par exemple dans la publication Organic Letters, 4(14), 2365-2368; 2002).

Selon un premier mode de réalisation de l'invention, la chaine polymère est un copolymère statistique obtenu à partir de différents monomères permettant d'obtenir les propriétés recherchées.

D'une manière avantageuse, la chaine polymère présente une température de transition vitreuse Tg ou une température de fusion Tf inférieure à T_{DA}, et de préférence comprise entre -50°C et 80°C, préférentiellement entre -20°C et 50°C.

Ainsi, les chaines polymères sont suffisamment mobiles à la température T_{DA} pour que la réaction de Diels-Alder entre la chaine polymère et les molécules de couplage se fasse facilement.

D'une manière avantageuse, la chaine polymère peut comprendre par exemple des unités pendantes agencées pour présenter une affinité appropriée avec les pièces horlogères. Ces unités pendantes sont également stables aux cycles de température auquel l'ensemble de pièces horlogères sera soumis.

De préférence, les unités pendantes agencées pour présenter une affinité appropriée avec les pièces horlogères sont choisies parmi le groupe comprenant les thiols, thioéthers, thioesters, sulfures, thioamides, hydroxyles, catéchol, amines, ammoniums, hétérocycles azotés, tels que imidazole ou pyridine, acides carboxyliques, esters, et anhydrides.

Ainsi, des exemples de monomères particulièrement appropriés pour introduire, dans la chaine polymère comprenant déjà les unités pendantes X, des unités pendantes agencées pour présenter une affinité appropriée avec les pièces horlogères sont :

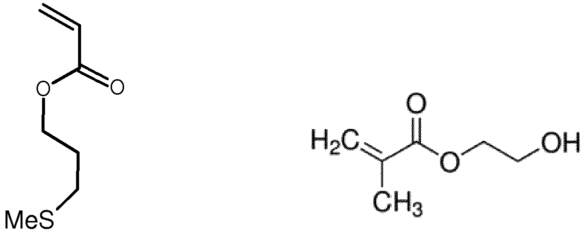

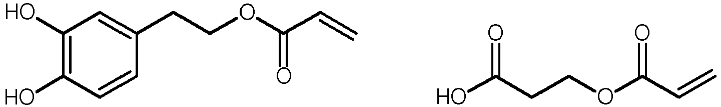

Ces molécules sont disponibles sur le marché.

D'une manière avantageuse, la chaine polymère peut également comprendre des unités pendantes agencées pour régler la température de transition vitreuse Tg ou la température de fusion Tf de la chaine polymère en dessous de la T_{DA}.

De préférence, les unités pendantes agencées pour régler la température de transition vitreuse Tg ou la température de fusion Tf de la chaine polymère sont choisies parmi le groupe comprenant les chaines alkyles éventuellement fonctionnalisées et les dérivés du phényle. Ainsi des exemples de monomères appropriés et disponibles commercialement pour former les unités pendantes agencées pour régler la Tg ou Tf du polymère sont les esters méthacryliques ou acryliques, les dérivés du styrène. On peut citer par exemple : le butyl methacrylate (homobutylmethacrylate = 20°C), le Cyclohexyl acrylate (homocyclohexylacrylate = 19°C), tert-Butyl methacrylate (Tg homotert-Butyl methacrylate = 118°C), le Dodecyl methacrylate (Tg homo Dodecyl methacrylate = -65°C), le 2-Ethoxyethyl acrylate (Tg homo 2-Ethoxyethyl acrylate = -50°C), le Ethyl acrylate (Tg homo Ethyl acrylate = -24°C), l'Hexyl acrylate (Tg Hexyl acrylate = 59°C), le styrene (Tg homopolymère de styrène = 100°C).

On comprend aisément également que certaines des unités pendantes agencées pour présenter une affinité appropriée avec les pièces horlogères peuvent également servir à ajuster la Tg ou la Tf de la chaine de polymère.

D'une manière avantageuse, la chaine copolymère contient entre 1 et 50%, préférentiellement entre 1 et 30%, d'unités pendantes X, entre 1 et 50%, préférentiellement entre 1 et 30%, d'unités pendantes agencées pour présenter une affinité appropriée avec les pièces horlogères, et entre 1 et 90%, préférentiellement entre 20 et 70%, d'unités pendantes agencées pour régler la température de transition vitreuse Tg ou la température de fusion Tf de la chaine.

Les techniques de polymérisation statistique sont bien connues de l'homme du métier et ne nécessitent pas de description détaillée. Un mode de polymérisation particulièrement approprié est la copolymérisation radicalaire libre, en solution ou en émulsion.

En ce qui concerne les molécules de couplage, leurs groupements diénophiles Y sont de préférence dérivés de composés choisis parmi le groupe comprenant le maléimide et l'anhydride maléique.

De préférence, Y est dérivé du maléimide.

Ainsi, la molécule de couplage peut avantageusement présenter une structure de formule (I) ci-dessous : 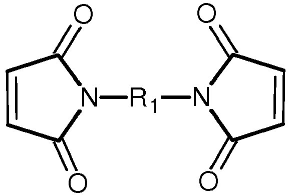 où R1 est une chaine alkyle, préférentiellement une chaine (CH₂)ₙ avec 1<n<35, substituée ou non par au moins un groupe hydroxyle ou par un groupe N-methylmaléimide, une chaine aryle, préférentiellement un phényle, ou une chaine PDMS (polydiméthylsiloxane) ou une structure de la forme 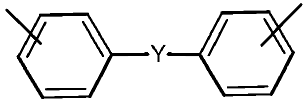 avec Y = -O-, -S-, -CH₂-, - C(CH₃)₂- ou une chaine PDMS ou une chaine PEG (polyéthylène glycol).

Des exemples de molécules de couplage particulièrement appropriées et disponibles sur le marché sont :

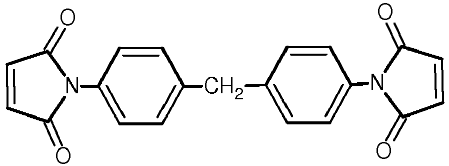

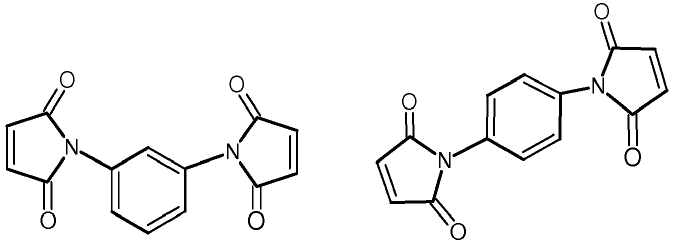

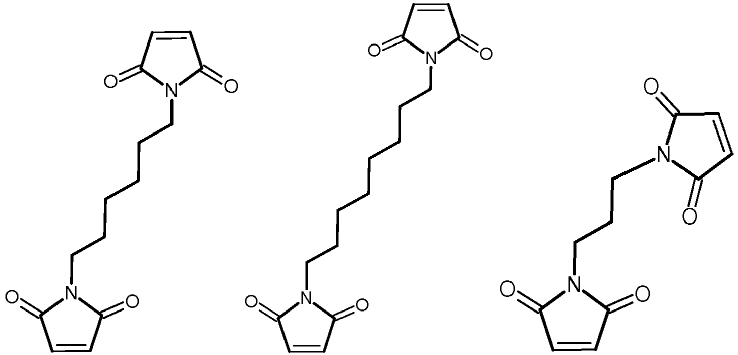

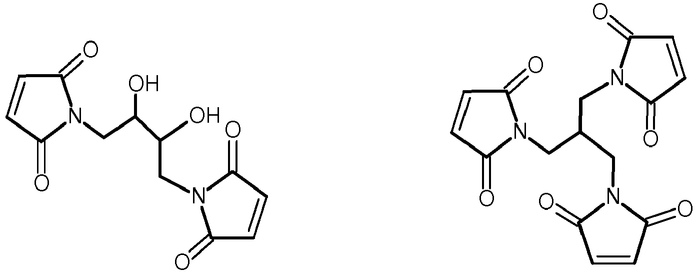

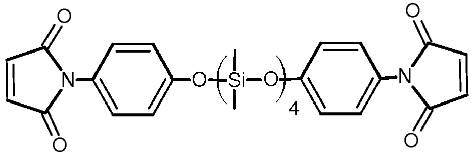

Dans la formulation se présentant sous la forme d'un mélange de chaines polymères comprenant au moins des unités pendantes diènes X et de molécules de couplage comprenant au moins deux groupements terminaux diénophiles Y, la quantité de molécules de couplage est telle que le ratio en nombre de molécules de couplage sur le nombre de fonctions diènes X pendantes est compris entre 0.5:2 et 1.2:2, et de préférence est égal à 1 :2.

Les deux pièces horlogères sont assemblées et peuvent être repositionnées selon un procédé d'assemblage et de repositionnement comprenant les étapes de :
a) préparer une solution dans un solvant (tel que l'alcool isopropylique, l'éthanol, le Méthyl tert-butyl éther, le tetrahydrofurane) d'un adhésif comprenant au moins une formulation se présentant sous la forme d'un mélange de chaines polymères comprenant au moins des unités pendantes diènes X et de molécules de couplage comprenant au moins deux groupements terminaux diénophiles Y, lesdites unités X et lesdits groupements Y étant agencés pour pouvoir réagir entre eux et se lier par réaction de Diels-Alder à une température T_{DA} et pour pouvoir se régénérer par réaction de rétro-Diels-Alder à une température T_{RDA},
   où T_{A} < T_{RDA} ≤ T_{C}, la température T_{DA} étant comprise entre 0°C et 100°C, préférentiellement entre 25°C et 70°C, et la température T_{RDA} étant comprise entre 50°C et 200°C, préférentiellement entre 80°C et 150°C, T_{DA} étant strictement inférieure à T_{RDA}
b) appliquer la solution dudit adhésif sur les pièces horlogères à assembler
c) sécher sous vide pour éliminer le solvant
d) placer les pièces horlogères à une température supérieure ou égale à la température T_{DA} et inférieure à T_{RDA} pour relier les chaines polymères entre elles au moyen des molécules de couplage par réaction de Diels-Alder de sorte que l'adhésif est sous la forme d'un réseau tridimensionnel
e) s'il est nécessaire de repositionner les pièces horlogères, chauffer lesdites pièces horlogères à la température T_{C} pour régénérer le mélange de chaines polymères et de molécules de couplage par réaction de rétro-Diels-Alder
f) repositionner les pièces horlogères
g) refroidir les pièces horlogères à une température supérieure ou égale à la température T_{DA} et inférieure à T_{RDA} pour relier à nouveau les chaines polymères entre elles au moyen des molécules de couplage par réaction de Diels-Alder de sorte que l'adhésif est à nouveau sous la forme d'un réseau tridimensionnel,
h) éventuellement répéter les étapes e) à g) autant de fois que nécessaire pour repositionner à nouveau les pièces horlogères.

Ainsi, à température ambiante, dans les conditions normales d'utilisation des pièces horlogères, ces dernières sont collées au moyen de l'adhésif résistant aux lavages horlogers, grâce au réseau tridimensionnel constitué par les chaines polymères. A température plus élevée, soit au moins à la température T_{RDA} de réaction de rétro-Diels-Alder, les ponts formés entre les chaines polymères par les molécules de couplage se brisent pour casser le réseau tridimensionnel. La viscosité de l'adhésif diminue de sorte qu'il est alors possible de repositionner minutieusement les pièces horlogères. L'ensemble est refroidi et placé à une température permettant de déclencher la réaction de Diels-Alder entre les chaines polymères et les molécules de couplage afin de reformer le réseau tridimensionnel et figer les pièces horlogères dans leur nouvelle position.

Selon un deuxième mode de réalisation de l'invention, la chaine polymère est un copolymère bloc comprenant au moins un premier bloc polymère présentant une température de transition vitreuse Tg ou une température de fusion Tf comprise entre 40°C et 200°C, de préférence entre 60°C et 150°C, et au moins un deuxième bloc polymère comprenant au moins des unités pendantes diènes X et présentant une température de transition vitreuse Tg ou une température de fusion Tf inférieure à T_{DA}, et de préférence comprise entre -50°C et 60°C, et plus préférentiellement entre -50°C et 20°C.

Selon un troisième mode de réalisation de l'invention, la chaine polymère est un copolymère bloc comprenant à chacune de ses extrémités un bloc polymère présentant une température de transition vitreuse Tg ou une température de fusion Tf comprise entre 40°C et 200°C, de préférence entre 60°C et 150°C, et un bloc polymère central comprenant au moins des unités pendantes diènes X et présentant une température de transition vitreuse Tg ou une température de fusion Tf inférieure à T_{DA}, et de préférence comprise entre -50°C et 60°C, et plus préférentiellement entre -50°C et 20°C.

Selon ces deuxième et troisième modes de réalisation, la chaine polymère comprend au moins un bloc « dur » constitué par le bloc polymère présentant une température de transition vitreuse Tg ou une température de fusion Tf comprise entre 40°C et 200°C, de préférence entre 60°C et 150 °C, et un bloc « mou » constitué par le bloc polymère comprenant au moins des unités pendantes diènes X et présentant une température de transition vitreuse Tg ou une température de fusion Tf inférieure à T_{DA}, et de préférence comprise entre -50°C et 60°C, et plus préférentiellement entre -50°C et 20°C.

Cette structure de bloc mou / bloc dur dans laquelle les blocs ont chacun leur température de transition vitreuse ou de fusion propre, permet avantageusement de conférer à l'adhésif deux propriétés : repositionnement/figeage rapide et résistance aux lavages.

En effet, le bloc dur (de plus haute Tg ou Tf) permet d'assurer la solidification de l'adhésif à température ambiante (≤25°C) et un repositionnement fin et rapide des pièces horlogères à une température supérieure à la température de transition vitreuse Tg ou de fusion Tf du bloc dur. Le bloc dur joue le même rôle qu'un adhésif thermofusible.

Les blocs mous (de plus basse Tg ou Tf) couplés par les molécules de couplage permettent de créer un réseau tridimensionnel thermoréversible entre les copolymères blocs et d'assurer ainsi une résistance aux lavages horlogers. Comme décrit ci-dessus, le réseau tridimensionnel est formé en plaçant l'ensemble, repositionné et figé par le bloc dur, pendant quelques heures à une température nécessaire pour réaliser la réaction de Diels-Alder entre les blocs mous et les molécules de couplage. La Tg ou Tf faible de ce bloc mou, inférieure à T_{DA} permet d'assurer une grande mobilité des chaines et donc de favoriser le couplage par réaction de Diels Aider.

D'une manière avantageuse, le bloc polymère « dur » présentant une température de transition vitreuse Tg ou une température de fusion Tf comprise entre 40°C et 200°C, de préférence entre 60°C et 150°C, est un homopolymère ou copolymère formé à partir de partir de monomères acryliques, méthacryliques, acrylamides, méthacrylamides styréniques, ou vinyliques. Des exemples de monomères particulièrement appropriés pour obtenir un bloc avec une température de transition vitreuse ou une température de fusion Tf comprise entre 60°C et 150°C sont le terbutylmethacrylate, Isobutyl methacrylate Ethyl methacrylate, Isobornyl acrylate, Isobornyl methacrylate, Phenyl methacrylate, N-Isopropylacrylamide, Isopropyl methacrylate, Methacrylic acid, Methacrylic anhydride, Methacrylonitrile, Methyl acrylate, Methyl methacrylate, Phenyl methacrylate, styrène, 3-Methylstyrene, 4-Methylstyrene, Vinyl alcohol, Vinyl benzoate, Vinyl cyclohexanoate.

Dans le bloc polymère « mou », les unités pendantes diènes X sont les mêmes que celles définies ci-dessus.

Le bloc polymère « mou » peut avantageusement être un copolymère obtenu à partir de différents monomères permettant d'obtenir les propriétés recherchées.

Ainsi, le bloc polymère « mou » peut comprendre des unités pendantes agencées pour présenter une affinité appropriée avec les pièces horlogères. Ces unités sont les mêmes que celles définies ci-dessus pour le copolymère statistique.

De même, le bloc polymère « mou » peut comprendre des unités pendantes agencées pour régler la température de transition vitreuse Tg ou la température de fusion Tf dudit bloc polymère « mou » en dessous de la T_{DA}. Ces unités sont les mêmes que celles définies ci-dessus pour le copolymère statistique.

Les techniques de copolymérisation en bloc sont bien connues de l'homme du métier et ne nécessitent pas de description détaillée.

Préférentiellement, deux voies de synthèse peuvent être utilisées pour obtenir le copolymère bloc. Une première voie possible est la synthèse séquentielle des blocs. Cette voie peut par exemple comprendre les étapes suivantes :
- polymérisation anionique de styrène pour obtenir le bloc polymère dur
- fonctionnalisation en bout de chaine du styrène pour obtenir un macro-amorceur
- copolymérisation radicalaire par transfert d'atomes (ATRP) de furfuryl methacrylate / butylmethacrylate / hydroxyethylmethacrylate pour obtenir un bloc polymère mou à partir du macro-amorceur (= polystyrène fonctionnel)
ou encore :
- polymérisation radicalaire contrôlée de furfuryl methacrylate / butylmethacrylate / hydroxyethylmethacrylate à partir d'un initiateur bifonctionnel (par exemple PhCOCHCl₂) pour obtenir le bloc mou bifonctionnel
- croissance des blocs styrène à partir du macroamorceur (=bloc mou bifonctionnel) par polymérisation radicalaire contrôlée

Une deuxième voie possible est la synthèse par « Click chemistry » entre les 2 blocs dur et mou. Cette voie peut par exemple comprendre les étapes suivantes :
- synthèse par ATRP d'un copolymère de furfurylmethacrylate / hydroxyethylmethacrylate /butylmethacrylate fonctionnel alcyne
- couplage en click chemistry du copolymère de furfurylmethacrylate / hydroxyethylmethacrylate /butylmethacrylate fonctionnel alcyne avec le polystyrène fonctionnel azide représenté ci-dessous et disponible commercialement :

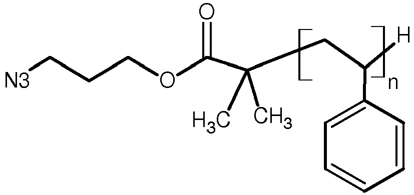

Un exemple de copolymère bloc comprenant un bloc dur et un bloc mou est représenté ci-dessous :

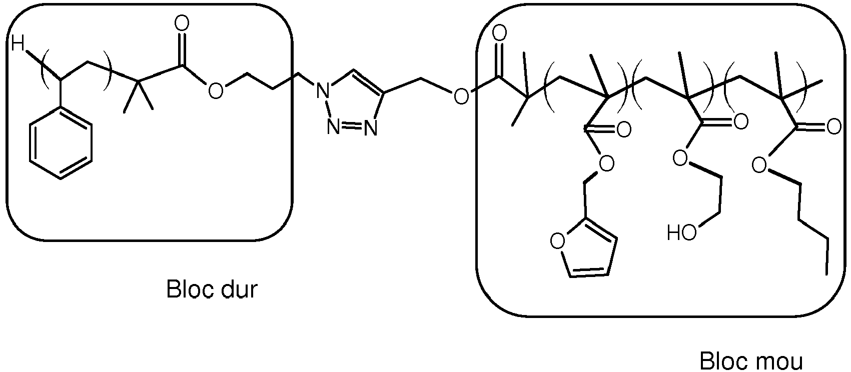

Les deux pièces horlogères sont assemblées et peuvent être repositionnées selon un procédé d'assemblage et de repositionnement comprenant les étapes de :
a) préparer dans un solvant (tel que alcool isopropylique, éthanol, Méthyl tert-butyl éther, tetrahydrofurane)une solution d'un adhésif comprenant au moins une formulation se présentant sous la forme d'un mélange de chaines copolymères blocs comprenant au moins un premier bloc polymère présentant une température de transition vitreuse Tg ou une température de fusion Tf comprise entre 40°C et 200°C, et au moins un deuxième bloc polymère comprenant au moins des unités pendantes diènes X et présentant une température de transition vitreuse Tg ou une température de fusion Tf inférieure à T_{DA} et de molécules de couplage comprenant au moins deux groupements terminaux diénophiles Y, lesdites unités X et lesdits groupements Y étant agencés pour pouvoir réagir entre eux et se lier par réaction de Diels-Alder à une température T_{DA} et pour pouvoir se régénérer par réaction de rétro-Diels-Alder à une température T_{RDA},
   où T_{A} < T_{RDA} ≤ T_{C}, la température T_{DA} étant comprise entre 0°C et 100°C, préférentiellement entre 25°C et 70°C, la température T_{RDA} étant comprise entre 50°C et 200°C, préférentiellement entre 80°C et 150°C, T_{DA} étant strictement inférieure à T_{RDA}, et la température T_{C} étant supérieure à la température de transition vitreuse Tg ou à la température de fusion Tf du premier bloc polymère,
b) appliquer la solution dudit adhésif sur les pièces horlogères à assembler
c) sécher, par exemple sous vide pour éliminer le solvant
d) placer les pièces horlogères à une température supérieure ou égale à la température de transition vitreuse Tg ou à la température de fusion Tf du premier bloc polymère pour repositionner finement les pièces horlogères
e) refroidir à une température inférieure ou égale à la température de transition vitreuse Tg ou à la température de fusion Tf du premier bloc polymère afin de figer l'ensemble encollé
f) placer les pièces horlogères, par exemple par mise à l'étuve, pendant quelques heures, à une température supérieure ou égale à la température T_{DA} et inférieure à T_{RDA} pour relier les chaines copolymères blocs entre elles au moyen des molécules de couplage par réaction de Diels-Alder de sorte que l'adhésif est sous la forme d'un réseau tridimensionnel
g) s'il est nécessaire de repositionner les pièces horlogères, chauffer lesdites pièces horlogères à la température T_{C} pour régénérer le mélange de chaines copolymères blocs et de molécules de couplage par réaction de rétro-Diels-Alder
h) repositionner les pièces horlogères
i) reproduire les étapes e) à f)
j) éventuellement répéter les étapes g) à i) autant de fois que nécessaire pour repositionner à nouveau les pièces horlogères.

L'avantage d'une structure bloc est que l'ensemble de pièces horlogères peut être repositionné à chaud et figé rapidement par refroidissement des blocs durs tout en conservant la flexibilité des blocs mous afin qu'ils aient suffisamment de mobilité pour pouvoir réagir par réaction de Diels-Alder avec les molécules de couplage à une température inférieure à la température de transition vitreuse ou à la température de fusion Tf des blocs durs.

Exemples de synthèses de chaines polymères :

### Exemple 1 :

On synthétise la chaîne polymère sous la forme d'un copolymère statistique par polymérisation radicalaire libre de :
a) furfuryl méthacrylate
b) 2-Carboxyethyl acrylate
c) hydroxyéthyl acrylate
d) Dodécyl méthacrylate
   selon le mode opératoire suivant:
   dans un tube de Schlenk contenant du toluène (3mL) préalablement dégazé à l'azote, sont ajoutés le furfuryl méthacrylate (1.06mL, 6.9mmol), 2-Carboxyethyl acrylate (0.41mL, 3.5mmol), hydroxyéthyl acrylate (0.39mL, 3.5 mmol), dodécylméthacrylate (2.70mL, 9.2 mmol). Le milieu réactionnel est barboté 5 min à l'azote. 0.5mL d'une solution d'azobisisobutyronitrile (AIBN) à 0.228mol/L est ajouté. Le milieu réactionnel est agité et chauffé à 80°C pendant 24h. Le polymère est coagulé dans le méthanol froid et obtenu sous forme d'un gel (rendement =75%).

On obtient le copolymère statistique suivant :

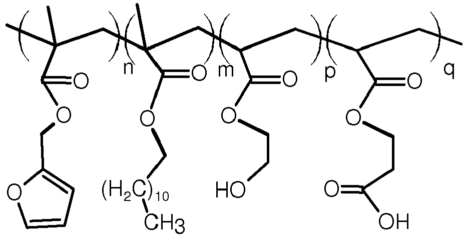

Pour former l'adhésif repositionnable à chaud, la chaine de polymère précédemment décrite est mise en solution dans du toluène puis mélangée à l'agent de couplage 4,4'-(Methylenedi-p-phénylène)dimaléimide (3.4mmol, 1.2g).

Cette solution est ensuite déposée sur les pièces horlogères à assembler selon le protocole décrit précédemment.

### Exemple 2 :

On synthétise la chaîne polymère sous la forme d'un copolymère bloc A-B-A par le mode opératoire suivant :
dans un tube de Schlenk contenant du toluène (6mL) préalablement dégazé à l'azote, sont ajoutés le furfuryl méthacrylate (3mL, 19.2 mmol), l'hydroxyéthyl méthacrylate (1.6mL, 12.8mmol), le dodécylméthacrylate (5.6mL, 19.2mmol), le catalyseur Ru(Ind)Cl/PPh3)2 (10mg), une solution de l'initiateur bifonctionnel CHCl2(COPh) (0.32mL d'une solution à 400mmol/L dans le toluène) et une solution de n-Bu3N dans le toluène (0.64mL d'une solution à 0.27mmol/L). Le milieu réactionnel est barboté 5 min à l'azote puis agité et chauffé à 80°C pendant 24h. Le milieu réactionnel est précipité dans l'acétone. Le précipité est isolé par centrifugation, solubilisé dans le toluène puis coagulé dans le méthanol. Le polymère est séché sous vide puis utilisé comme macroinitiateur pour l'étape suivante. Pour cela, une solution du polymère macroinitiateur dans le toluène (2mM) est préparée. Puis dans un tube de Schlenk sont ajoutés : la solution 2M de polymère macroinititaeur (7.1mL, 0.0142 mmol), le catalyseur Ru(Ind)Cl/PPh3)2 (10mg), le méthylméthacrylate (0.76 mL, 7.1mmol). Le mélange est chauffé et agité pendant 24h à 80°C. Le milieu réactionnel est précipité dans l'acétone. Le précipité est isolé par centrifugation, solubilisé dans le toluène puis coagulé dans le méthanol. Le polymère est séché sous vide puis utilisé comme macroinitiateur pour l'étape suivante.

On obtient le copolymère bloc suivant :

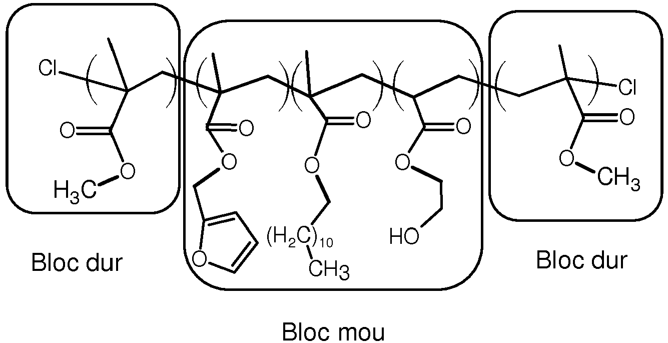

Pour former l'adhésif repositionnable à chaud, la chaine de polymère précédemment décrite est mise en solution dans du toluène puis mélangée à l'agent de couplage 4,4'-(Methylenedi-p-phenylene)dimaleimide (134mg, 0.375 mmol).

Cette solution est ensuite déposée sur les pièces horlogères à assembler selon le protocole décrit précédemment.

## Revendications

1. Ensemble d'au moins deux pièces horlogères assemblées entre elles au moyen d'un adhésif lorsque ledit adhésif est à une température T_{A} et pouvant être repositionnées l'une par rapport à l'autre lorsque ledit adhésif est chauffé à une température T_{C}, **caractérisé en ce que** ledit adhésif comprend au moins une formulation se présentant :
- à la température T_{C} sous la forme d'un mélange de chaines polymères comprenant au moins des unités pendantes diènes X et de molécules de couplage comprenant au moins deux groupements terminaux diénophiles Y, lesdites unités X et lesdits groupements Y étant agencés pour pouvoir réagir entre eux et se lier par réaction de Diels-Alder à une température T_{DA} et pour pouvoir se régénérer par réaction de rétro-Diels-Alder à une température T_{RDA},
- à une température T_{A} sous la forme d'un réseau tridimensionnel dans lequel les chaines polymères sont reliées entre elles par les molécules de couplage par réaction de Diels-Alder,
où T_{A} < T_{RDA} ≤ T_{C}
où la température T_{DA} est comprise entre 0°C et 100°C, préférentiellement entre 25°C et 70°C et la température T_{RDA} est comprise entre 50°C et 200°C, préférentiellement entre 80°C et 150°C, T_{DA} étant strictement inférieure à T_{RDA}.

2. Ensemble selon la revendication 1, **caractérisé en ce que** la chaine polymère est un copolymère statistique.

3. Ensemble selon la revendication 2, **caractérisé en ce que** la chaine polymère présente une température de transition vitreuse Tg inférieure à T_{DA}, et de préférence comprise entre -50°C et 80°C.

4. Ensemble selon l'une des revendications précédentes, **caractérisé en ce que** la chaine polymère comprend des unités pendantes agencées pour présenter une affinité appropriée avec les pièces horlogères.

5. Ensemble selon l'une des revendications précédentes, **caractérisé en ce que** la chaine polymère comprend des unités pendantes agencées pour régler la température de transition vitreuse Tg ou la température de fusion Tf de la chaine polymère.

6. Ensemble selon la revendication 1, **caractérisé en ce que** la chaine polymère est un copolymère bloc comprenant au moins un premier bloc polymère présentant une température de transition vitreuse Tg ou une température de fusion Tf comprise entre 40°C et 200°C, de préférence entre 60°C et 150°C, et au moins un deuxième bloc polymère comprenant au moins des unités pendantes diènes X et présentant une température de transition vitreuse Tg ou une température de fusion Tf inférieure à T_{DA}, et de préférence comprise entre -50°C et 60°C.

7. Ensemble selon la revendication 6, **caractérisé en ce que** la chaine polymère est un copolymère bloc comprenant à chacune de ses extrémités un bloc polymère présentant une température de transition vitreuse Tg ou une température de fusion Tf comprise entre 40°C et 200°C, de préférence entre 60°C et 150°C, et un bloc polymère central comprenant au moins des unités pendantes diènes X et présentant une température de transition vitreuse Tg ou une température de fusion Tf inférieure à T_{DA}, et de préférence comprise entre -50°C et 60°C.

8. Ensemble selon l'une des revendications 6 à 7, **caractérisé en ce que** le bloc polymère présentant une température de transition vitreuse Tg ou une température de fusion Tf comprise entre 40°C et 200°C est choisi parmi le groupe comprenant le poly(terbutyl methacrylate), le poly(4-tert-Butylstyrene), le poly(cyclohexyl methacrylate), le polystyrene, et le poly(méthacrylate de méthyle).

9. Ensemble selon l'une des revendications 6 à 8, **caractérisé en ce que** le deuxième bloc polymère comprend des unités pendantes agencées pour présenter une affinité appropriée avec les pièces horlogères.

10. Ensemble selon l'une des revendications 6 à 9, **caractérisé en ce que** le deuxième bloc polymère comprend des unités pendantes agencées pour régler la température de transition vitreuse Tg ou la température de fusion Tf dudit deuxième bloc polymère.

11. Ensemble selon l'une des revendications précédentes, **caractérisé en ce que** les unités pendantes diènes X sont choisies parmi le groupe comprenant le furane, le cyclopentadiène et l'anthracène.

12. Ensemble selon la revendication 4 ou 9, **caractérisé en ce que** les unités pendantes agencées pour présenter une affinité appropriée avec les pièces horlogères sont choisies parmi le groupe comprenant les thiols, thioéthers, thioesters, sulfures, thioamides, hydroxyles, catéchol, amines, ammoniums, hétérocycles azotés, acides carboxyliques, esters, et anhydrides.

13. Ensemble selon la revendication 5 ou 10, **caractérisé en ce que** les unités pendantes agencées pour régler la température de transition vitreuse Tg ou la température de fusion Tf de la chaine polymère ou du deuxième bloc polymère sont choisies parmi le groupe comprenant les chaines alkyles éventuellement fonctionnalisées et les dérivés du phényle.

14. Ensemble selon l'une des revendications précédentes, **caractérisé en ce que** les groupements diénophiles Y sont dérivés de composés choisis parmi le groupe comprenant le maléimide et l'anhydride maléique.

15. Procédé d'assemblage et de repositionnement d'au moins deux pièces horlogères au moyen d'un adhésif repositionnable à chaud, lesdites pièces horlogères étant maintenues assemblées entre elles lorsque ledit adhésif est à une température T_{A} et pouvant être repositionnées l'une par rapport à l'autre lorsque ledit adhésif est chauffé à une température T_{C}, comprenant les étapes de :
a) préparer une solution d'un adhésif comprenant au moins une formulation se présentant sous la forme d'un mélange de chaines polymères comprenant au moins des unités pendantes diènes X et de molécules de couplage comprenant au moins deux groupements terminaux diénophiles Y, lesdites unités X et lesdits groupements Y étant agencés pour pouvoir réagir entre eux et se lier par réaction de Diels-Alder à une température T_{DA} et pour pouvoir se régénérer par réaction de rétro-Diels-Alder à une température T_{RDA},
où T_{A} < T_{RDA} ≤ T_{C}, la température T_{DA} étant comprise entre 0°C et 100°C, préférentiellement entre 25°C et 70°C, et la température T_{RDA} étant comprise entre 50°C et 200°C, préférentiellement entre 80°C et 150°C, T_{DA} étant strictement inférieure à T_{RDA}
b) appliquer la solution dudit adhésif sur les pièces horlogères
c) sécher
d) placer les pièces horlogères à une température supérieure ou égale à la température T_{DA} et inférieure à T_{RDA} pour relier les chaines polymères entre elles au moyen des molécules de couplage par réaction de Diels-Alder de sorte que l'adhésif est sous la forme d'un réseau tridimensionnel
e) chauffer les pièces horlogères à la température T_{C} pour régénérer le mélange de chaines polymères et de molécules de couplage par réaction de rétro-Diels-Alder
f) repositionner les pièces horlogères
g) refroidir les pièces horlogères à une température supérieure ou égale à la température T_{DA} et inférieure à T_{RDA} pour relier à nouveau les chaines polymères entre elles au moyen des molécules de couplage par réaction de Diels-Alder de sorte que l'adhésif est à nouveau sous la forme d'un réseau tridimensionnel,
h) éventuellement répéter les étapes e) à g) autant de fois que nécessaire pour repositionner à nouveau les pièces.

16. Procédé d'assemblage et de repositionnement d'au moins deux pièces horlogères au moyen d'un adhésif repositionnable à chaud, lesdites pièces horlogères étant maintenues assemblées entre elles lorsque ledit adhésif est à une température T_{A} et pouvant être repositionnées l'une par rapport à l'autre lorsque ledit adhésif est chauffé à une température T_{C}, comprenant les étapes de :
a) préparer une solution d'un adhésif comprenant au moins une formulation se présentant sous la forme d'un mélange de chaines copolymères blocs comprenant au moins un premier bloc polymère présentant une température de transition vitreuse Tg ou une température de fusion Tf comprise entre 40°C et 200°C, et au moins un deuxième bloc polymère comprenant au moins des unités pendantes diènes X et présentant une température de transition vitreuse Tg ou une température de fusion Tf inférieure à T_{DA}, et de molécules de couplage comprenant au moins deux groupements terminaux diénophiles Y, lesdites unités X et lesdits groupements Y étant agencés pour pouvoir réagir entre eux et se lier par réaction de Diels-Alder à une température T_{DA} et pour pouvoir se régénérer par réaction de rétro-Diels-Alder à une température T_{RDA},
où T_{A} < T_{RDA} ≤ T_{C}, la température T_{DA} étant comprise entre 0°C et 100°C, préférentiellement entre 25°C et 70°C, la température T_{RDA} étant comprise entre 50°C et 200°C, préférentiellement entre 80°C et 150°C, T_{DA} étant strictement inférieure à T_{RDA}, et la température T_{C} étant supérieure à la température de transition vitreuse Tg ou à la température de fusion Tf du premier bloc polymère,
b) appliquer la solution dudit adhésif sur les pièces horlogères
c) sécher
d) placer les pièces horlogères à une température supérieure ou égale à la température de transition vitreuse Tg ou à la température de fusion Tf du premier bloc polymère pour repositionner les pièces horlogères
e) refroidir à une température inférieure ou égale à la température de transition vitreuse Tg ou à la température de fusion Tf du premier bloc polymère,
f) placer les pièces horlogères à une température supérieure ou égale à la température T_{DA} et inférieure à T_{RDA} pour relier les chaines copolymères blocs entre elles au moyen des molécules de couplage par réaction de Diels-Alder de sorte que l'adhésif est sous la forme d'un réseau tridimensionnel
g) chauffer lesdites pièces horlogères à la température T_{C} pour régénérer le mélange de chaines copolymères blocs et de molécules de couplage par réaction de rétro-Diels-Alder
h) repositionner les pièces horlogères
i) reproduire les étapes e) à f)
j) éventuellement répéter les étapes g) à i) autant de fois que nécessaire pour repositionner à nouveau les pièces horlogères.

17. Utilisation d'un adhésif repositionnable à chaud pour maintenir assemblées entre elles au moins deux pièces horlogères lorsque ledit adhésif est à une température T_{A} et pour les repositionner l'une par rapport à l'autre lorsque ledit adhésif est chauffé à une température T_{C}, ledit adhésif comprenant au moins une formulation se présentant :
- à la température T_{C} sous la forme d'un mélange de chaines polymères comprenant au moins des unités pendantes diènes X et de molécules de couplage comprenant au moins deux groupements terminaux diénophiles Y, lesdites unités X et lesdits groupements Y étant agencés pour pouvoir réagir entre eux et se lier par réaction de Diels-Alder à une température T_{DA} et pour pouvoir se régénérer par réaction de rétro-Diels-Alder à une température T_{RDA},
- à une température T_{A} sous la forme d'un réseau tridimensionnel dans lequel les chaines polymères sont reliées entre elles par les molécules de couplage par réaction de Diels-Alder,
où T_{A} < T_{RDA} ≤ T_{C}
où la température T_{DA} est comprise entre 0°C et 100°C, préférentiellement entre 25°C et 70°C et la température T_{RDA} est comprise entre 50°C et 200°C, préférentiellement entre 80°C et 150°C, T_{DA} étant strictement inférieure à T_{RDA}.

18. Pièce d'horlogerie comprenant un ensemble de deux pièces horlogères assemblées entre elles au moyen d'un adhésif repositionnable à chaud selon l'une des revendications 1 à 14.

## Patentansprüche

1. Baueinheit aus mindestens zwei Uhrenteilen, die mittels eines Klebstoffs zusammengefügt sind, wenn der Klebstoff eine Temperatur T_{A} besitzt, und die relativ zueinander neu positionierbar sind, wenn der Klebstoff auf eine Temperatur Tc erhitzt ist, **dadurch gekennzeichnet, dass** der Klebstoff mindestens eine Formulierung umfasst, die vorliegt:
- bei der Temperatur Tc in Form eines Gemisches von Polymerketten, die mindestens angehängte Diengruppen X und mindestens zwei dienophile Endgruppierungen Y aufweisende Kopplungsmoleküle enthalten, wobei die Einheiten X und die Gruppierungen Y so beschaffen sind, dass sie miteinander reagieren können und durch eine Diels-Alder-Reaktion bei einer Temperatur T_{DA} verbindbar sind und bei einer Temperatur T_{RDA} durch eine Retro-Diels-Alder-Reaktion regenerierbar sind,
- bei einer Temperatur T_{A} in Form eines dreidimensionalen Gitters, in dem die Polymerketten durch die Kopplungsmoleküle durch eine Diels-Alder-Reaktion miteinander verbunden sind, wobei T_{A} < T_{RDA} ≤ T_{C}, wobei die Temperatur T_{DA} im Bereich von 0 °C bis 100 °C, vorzugsweise im Bereich von 25 °C bis 70 °C, liegt und die Temperatur T_{RDA} im Bereich von 50 °C bis 200 °C, vorzugsweise im Bereich von 80 °C bis 150 °C, liegt, wobei T_{DA} deutlich niedriger als T_{RDA} ist.

2. Baueinheit nach Anspruch 1, **dadurch gekennzeichnet, dass** die Polymerkette ein statistisches Copolymer ist.

3. Baueinheit nach Anspruch 2, **dadurch gekennzeichnet, dass** die Polymerkette eine Glasübergangstemperatur Tg niedriger als T_{DA} und vorzugsweise im Bereich von -50 °C bis 80 °C besitzt.

4. Baueinheit nach einem der vorhergehenden Ansprüche, **dadurch gekennzeichnet, dass** die Polymerkette angehängte Einheiten enthält, die so beschaffen sind, dass sie eine geeignete Affinität zu Uhrenteilen aufweisen.

5. Baueinheit nach einem der vorhergehenden Ansprüche, **dadurch gekennzeichnet, dass** die Polymerkette angehängte Einheiten umfasst, die so beschaffen sind, dass sie die Glasübergangstemperatur Tg oder die Schmelztemperatur Tf der Polymerkette einstellen.

6. Baueinheit nach Anspruch 1, **dadurch gekennzeichnet, dass** die Polymerkette ein Blockcopolymer ist, das mindestens einen ersten Polymerblock, der eine Glasübergangstemperatur Tg oder eine Schmelztemperatur Tf im Bereich von 40 °C bis 200 °C, vorzugsweise im Bereich von 60 °C bis 150 °C, aufweist, und mindestens einen zweiten Polymerblock umfasst, der mindestens angehängte Dieneinheiten X enthält und eine Glasübergangstemperatur Tg oder eine Schmelztemperatur Tf kleiner als T_{DA} und vorzugsweise im Bereich von -50 °C bis 60 °C besitzt.

7. Baueinheit nach Anspruch 6, **dadurch gekennzeichnet, dass** die Polymerkette ein Blockcopolymer ist, das an jedem seiner Enden einen Polymerblock, der eine Glasübergangstemperatur Tg oder eine Schmelztemperatur Tf im Bereich von 40 °C bis 200 °C, vorzugsweise im Bereich von 60 °C bis 150 °C, besitzt, und einen mittleren Polymerblock umfasst, der mindestens angehängte Dieneinheiten X besitzt und eine Glasübergangstemperatur Tg oder eine Schmelztemperatur Tf kleiner als T_{DA} und vorzugsweise im Bereich von -50 °C bis 60 °C besitzt.

8. Baueinheit nach einem der Ansprüche 6 bis 7, **dadurch gekennzeichnet, dass** der Polymerblock eine Glasübergangstemperatur Tg oder eine Schmelztemperatur Tf im Bereich von 40 °C bis 200 °C aufweist und aus der Gruppe gewählt ist, die Poly(terbutyl-methacrylat), Poly(4-tert-butylstyrol), Poly(cyclohexyl-methacrylat), Polystyrol und Poly(methyl-methacrylat) enthält.

9. Baueinheit nach einem der Ansprüche 6 bis 8, **dadurch gekennzeichnet, dass** der zweite Polymerblock angehängte Einheiten enthält, die dafür ausgelegt sind, eine geeignete Affinität zu Uhrenteilen aufzuweisen.

10. Baueinheit nach einem der Ansprüche 6 bis 9, **dadurch gekennzeichnet, dass** der zweite Polymerblock angehängte Einheiten enthält, die ausgelegt sind, die Glasübergangstemperatur Tg oder die Schmelztemperatur tf des zweiten Polymerblocks einzustellen.

11. Baueinheit nach einem der vorhergehenden Ansprüche, **dadurch gekennzeichnet, dass** die angehängten Dieneinheiten X aus der Gruppe ausgewählt sind, die Furan, Cyclopentadien und Anthrazen enthält.

12. Baueinheit nach Anspruch 4 oder 9, **dadurch gekennzeichnet, dass** die angehängten Einheiten, die ausgelegt sind, eine geeignete Affinität zu Uhrenteilen aufzuweisen, aus der Gruppe ausgewählt sind, die Thiole, Thioether, Thioester, Sulfide, Thioamide, Hydroxyle, Katechol, Amine, Ammonium, nitrierte Heterocyclen, Carboxylsäuren, Ester und Anhydride enthält.

13. Baueinheit nach Anspruch 5 oder 10, **dadurch gekennzeichnet, dass** die angehängten Einheiten, die ausgelegt sind, die Glasübergangstemperatur Tg oder die Schmelztemperatur Tf der Polymerkette oder des zweiten Polymerblocks zu regulieren, aus der Gruppe ausgewählt sind, die eventuell funktionalisierte Alkylketten und Phenylderivate enthält.

14. Baueinheit nach einem der vorhergehenden Ansprüche, **dadurch gekennzeichnet, dass** die dienophilen Gruppierungen Y Derivate von Verbindungen sind, die aus der Gruppe ausgewählt sind, die Maleimid und Maleinsäureanhydrid enthält.

15. Verfahren zum Zusammenfügen und Neupositionieren von mindestens zwei Uhrenteilen mittels eines heiß neu positionierbaren Klebstoffs, wobei die Uhrenteile zusammengehalten werden, wenn der Klebstoff eine Temperatur T_{A} besitzt, und relativ zueinander neu positionierbar sind, wenn der Klebstoff auf eine Temperatur Tc erhitzt ist, umfassend die folgenden Schritte:
a) Herstellen einer Klebstofflösung, die mindestens eine Formulierung besitzt, die vorliegt in Form eines Gemisches von Polymerketten, umfassend mindestens angehängte Dieneinheiten X und Kopplungsmoleküle, die mindestens zwei dienophile Endgruppierungen Y enthalten, wobei die Einheiten X und die Gruppierungen Y so beschaffen sind, dass sie miteinander reagieren können und durch eine Diels-Alder-Reaktion bei einer Temperatur T_{DA} verbindbar sind und durch eine Retro-Diels-Alder-Reaktion bei einer Temperatur T_{RDA} regenerierbar sind, wobei T_{A} < T_{RDA} ≤ T_{C}, wobei die Temperatur T_{DA} im Bereich von 0 °C bis 100 °C, vorzugsweise im Bereich von 25 °C bis 70 °C, liegt und die Temperatur T_{RDA} im Bereich von 50 °C bis 200 °C, vorzugsweise im Bereich von 80 °C bis 150 °C, liegt, und T_{DA} deutlich niedriger als T_{RDA} ist,
b) Aufbringen der Klebstofflösung auf die Uhrenteile,
c) Trocknen,
d) Bringen der Uhrenteile auf eine Temperatur größer oder gleich der Temperatur T_{DA} und niedriger als T_{RDA}, um die Polymerketten mittels der Kopplungsmoleküle durch eine Diels-Alder-Reaktion miteinander zu verbinden, so dass der Klebstoff die Form eines dreidimensionalen Gitters aufweist,
e) Erwärmen der Uhrenteile auf die Temperatur Tc, um das Gemisch der Polymerketten und der Kopplungsmoleküle durch eine Retro-Diels-Alder-Reaktion zu regenerieren,
f) Neupositionieren der Uhrenteile,
g) Abkühlen der Uhrenteile auf eine Temperatur größer oder gleich der Temperatur T_{DA} und niedriger als T_{RDA}, um die Polymerketten mittels der Kopplungsmoleküle durch eine Diels-Alder-Reaktion erneut miteinander zu verbinden, so dass der Klebstoff erneut die Form eines dreidimensionalen Gitters aufweist,
h) eventuell Wiederholen der Schritte e) bis g) sooft wie notwendig, um die Teile wieder neu zu positionieren.

16. Verfahren zum Zusammenfügen und Neupositionieren mindestens zweier Uhrenteile mittels eines heiß neu positionierbaren Klebstoffs, wobei die Uhrenteile zusammengehalten werden, wenn der Klebstoff eine Temperatur T_{A} besitzt, und relativ zueinander neu positionierbar sind, wenn der Klebstoff auf eine Temperatur T_{C} erwärmt wird, umfassend die folgenden Schritte:
a) Herstellen einer Klebstofflösung, die mindestens eine Formulierung besitzt, die vorliegt in Form eines Gemisches von Blockcopolymer-Ketten, umfassend mindestens einen ersten Polymerblock, der eine Glasübergangstemperatur Tg oder eine Schmelztemperatur Tf im Bereich von 40 °C und 200 °C aufweist, und mindestens einen zweiten Polymerblock, der mindestens angehängte Dieneinheiten X aufweist und eine Glasübergangstemperatur Tg oder eine Schmelztemperatur Tf niedriger als T_{DA} besitzt, und Kopplungsmoleküle, die mindestens zwei dienophile Endgruppierungen Y besitzen, wobei die Einheiten X und die Gruppierungen Y so beschaffen sind, dass sie miteinander reagieren können und durch eine Diels-Alder-Reaktion bei einer Temperatur T_{DA} verbindbar sind und durch eine Retro-Diels-Alder-Reaktion bei einer Temperatur T_{RDA} regenerierbar sind, wobei T_{A} < T_{RDA} ≤ T_{C}, wobei die Temperatur T_{DA} im Bereich von 0 °C bis 100 °C, vorzugsweise im Bereich von 25 °C bis 70 °C, liegt, die Temperatur T_{RDA} im Bereich von 50 °C bis 200 °C, vorzugsweise im Bereich von 80 °C bis 150 °C, liegt, T_{DA} deutlich niedriger als T_{RDA} ist und die Temperatur Tc höher als die Glasübergangstemperatur Tg oder die Schmelztemperatur Tf des ersten Polymerblocks ist,
b) Aufbringen der Lösung des Klebstoffs auf die Uhrenteile,
c) Trocknen,
d) Bringen der Uhrenteile auf eine Temperatur, die größer oder gleich der Glasübergangstemperatur Tg oder der Schmelztemperatur Tf des ersten Polymerblocks ist, um die Uhrenteile neu zu positionieren,
e) Abkühlen auf eine Temperatur kleiner oder gleich der Glasübergangstemperatur Tg oder der Schmelztemperatur Tf des ersten Polymerblocks,
f) Bringen der Uhrenteile auf eine Temperatur größer oder gleich der Temperatur T_{DA} und kleiner als T_{RDA}, um die Blockcopolymer-Ketten mittels der Kopplungsmoleküle durch eine Diels-Alder-Reaktion miteinander zu verbinden, so dass der Klebstoff die Form eines dreidimensionalen Gitters aufweist,
g) Erwärmen der Uhrenteile auf die Temperatur T_{C}, um das Gemisch von Blockcopolymer-Ketten und von Kopplungsmolekülen durch eine Retro-Diels-Alder-Reaktion zu regenerieren,
h) Neupositionieren der Uhrenteile,
i) Wiederholen der Schritte e) bis f)
j) eventuell Wiederholen der Schritte g) bis i) sooft wie notwendig, um die Uhrenteile wieder neu zu positionieren.

17. Verwendung eines heiß neu positionierbaren Klebstoffs, um mindestens zwei Uhrenteile zusammengefügt zu halten, wenn der Klebstoff eine Temperatur T_{A} besitzt, und um sie relativ zueinander neu zu positionieren, wenn der Klebstoff auf eine Temperatur T_{C} erwärmt ist, wobei der Klebstoff mindestens eine Formulierung umfasst, die vorliegt:
- bei der Temperatur T_{C} in Form eines Gemisches von Polymerketten, die mindestens angehängte Dieneinheiten X und mindestens zwei dienophile Endgruppierungen Y enthaltende Kopplungsmoleküle aufweisen, wobei die Einheiten X und die Gruppierungen Y so beschaffen sind, dass sie miteinander reagieren können und durch eine Diels-Alder-Reaktion bei einer Temperatur T_{DA} verbindbar sind und durch eine Retro-Diels-Alder-Reaktion bei einer Temperatur T_{RDA} regenerierbar sind,
- bei einer Temperatur T_{A} in Form eines dreidimensionalen Gitters, in dem die Polymerketten durch die Kopplungsmoleküle durch eine Diels-Alder-Reaktion miteinander verbunden sind, wobei T_{A} < T_{RDA} ≤ T_{C}, wobei die Temperatur T_{DA} im Bereich von 0 °C bis 100 °C, vorzugsweise im Bereich von 25 °C bis 70 °C, liegt, und die Temperatur T_{RDA} im Bereich von 50 °C bis 200 °C, vorzugsweise im Bereich von 80 °C bis 150 °C, liegt, wobei T_{DA} deutlich niedriger als T_{RDA} ist.

18. Zeitmessgerät, umfassend eine Baueinheit von zwei Uhrenteilen, die mittels eines heiß neupositionierbaren Klebstoffs nach einem der Ansprüche 1 bis 14 zusammengefügt sind.

## Claims

1. Assembly of at least two timepiece parts that are assembled together by means of an adhesive when said adhesive is at a temperature T_{A} and can be repositioned in relation to one another when said adhesive is heated to a temperature T_{C}, **characterised in that** said adhesive comprises at least one formulation, which:
- at the temperature T_{C} has the form of a mixture of polymer chains comprising at least pendant diene units X and of coupling molecules comprising at least two dienophile end groups Y, wherein said X units and said Y groups are arranged to be able to react with one another and to bond together by means of the Diels-Alder reaction at a temperature T_{DA} and to be able to regenerate by means of the retro-Diels-Alder reaction at a temperature T_{RDA},
- at a temperature T_{A} has the form of a three-dimensional network, in which the polymer chains are linked to one another by the coupling molecules by means of the Diels-Alder reaction,
where T_{A} < T_{RDA} ≤ T_{C}
where temperature T_{DA} ranges between 0°C and 100°C, preferably between 25°C and 70°C, and temperature T_{RDA} ranges between 50°C and 200°C, preferably between 80°C and 150°C, and T_{DA} is strictly lower than T_{RDA}.

2. Assembly according to claim 1, **characterised in that** the polymer chain is a statistical copolymer.

3. Assembly according to claim 2, **characterised in that** the polymer chain has a glass transition temperature Tg lower than T_{DA}, and preferably ranging between -50°C and 80°C.

4. Assembly according to one of the preceding claims, **characterised in that** the polymer chain comprises pendant units arranged to have an appropriate affinity with the timepiece parts.

5. Assembly according to one of the preceding claims, **characterised in that** the polymer chain comprises pendant units arranged to adjust the glass transition temperature Tg or melting temperature Tf of the polymer chain.

6. Assembly according to claim 1, **characterised in that** the polymer chain is a block copolymer comprising at least a first polymer block having a glass transition temperature Tg or a melting temperature Tf ranging between 40°C and 200°C, preferably between 60°C and 150°C, and at least a second polymer block comprising at least pendant diene units X and having a glass transition temperature Tg or a melting temperature Tf lower than T_{DA}, and preferably ranging between -50°C and 60°C.

7. Assembly according to claim 6, **characterised in that** the polymer chain is a block copolymer comprising at each of its ends a polymer block having a glass transition temperature Tg or a melting temperature Tf ranging between 40°C and 200°C, preferably between 60°C and 150°C, and a central polymer block comprising at least pendant diene units X and having a glass transition temperature Tg or a melting temperature Tf lower than T_{DA}, and preferably ranging between -50°C and 60°C.

8. Assembly according to one of claims 6 to 7, **characterised in that** the polymer block having a glass transition temperature Tg or a melting temperature Tf ranging between 40°C and 200°C is selected from the group consisting of poly(tert-butyl methacrylate), poly(4-tert-butyl styrene), poly(cyclohexyl methacrylate), polystyrene and poly(methyl methacrylate).

9. Assembly according to one of claims 6 to 8, **characterised in that** the second polymer block comprises pendant units arranged to have an appropriate affinity with the timepiece parts.

10. Assembly according to one of claims 6 to 9, **characterised in that** the second polymer block comprises pendant units arranged to adjust the glass transition temperature Tg or melting temperature Tf of said second polymer block.

11. Assembly according to one of the preceding claims, **characterised in that** the pendant diene units X are selected from the group consisting of furan, cyclopentadiene and anthracene.

12. Assembly according to claim 4 or 9, **characterised in that** the pendant units arranged to have an appropriate affinity with the timepiece parts are selected from the group consisting of thiols, thioethers, thioesters, sulphides, thioamides, hydroxyls, catechol, amines, ammoniums, nitrogenated heterocycles, carboxylic acids, esters and anhydrides.

13. Assembly according to claim 5 or 10, **characterised in that** the pendant units arranged to adjust the glass transition temperature Tg or melting temperature Tf of the polymer chain or the second polymer block are selected from the group consisting of possibly functionalised alkyl chains and phenyl derivatives.

14. Assembly according to one of the preceding claims, **characterised in that** the dienophile groups Y are derivatives of compounds selected from the group consisting of maleimide and maleic anhydride.

15. Process for assembling and repositioning at least two timepiece parts by means of a repositionable hot melt adhesive, wherein said timepiece parts are held together in assembled position when said adhesive is at a temperature T_{A} and can be repositioned in relation to one another when said adhesive is heated to a temperature Tc, comprising the steps of:
a) preparing a solution of an adhesive comprising at least one formulation having the form of a mixture of polymer chains comprising at least pendant diene units X and of coupling molecules comprising at least two dienophile end groups Y, wherein said X units and said Y groups are arranged to be able to react with one another and to bond together by means of the Diels-Alder reaction at a temperature T_{DA} and to be able to regenerate by means of the retro-Diels-Alder reaction at a temperature T_{RDA},
where T_{A} < T_{RDA} ≤ Tc, wherein temperature T_{DA} ranges between 0°C and 100°C, preferably between 25°C and 70°C, and temperature T_{RDA} ranges between 50°C and 200°C, preferably between 80°C and 150°C, and T_{DA} is strictly lower than T_{RDA},
b) applying the solution of said adhesive to the timepiece parts
c) drying
d) placing the timepiece parts at a temperature higher than or equal to the temperature T_{DA} and lower than T_{RDA} to link the polymer chains to one another by means of the coupling molecules by the Diels-Alder reaction so that the adhesive is in the form of a three-dimensional network
e) heating the timepiece parts to the temperature Tc to regenerate the mixture of polymer chains and coupling molecules by means of the retro-Diels-Alder reaction
f) repositioning the timepiece parts
g) cooling the timepiece parts to a temperature higher than or equal to temperature T_{DA} and lower than T_{RDA} to link the polymer chains to one another again by means of the coupling molecules by the Diels-Alder reaction so that the adhesive is once again in the form of a three-dimensional network
h) if necessary, repeating steps e) to g) as many times as required to reposition the timepiece parts again.

16. Process for assembling and repositioning at least two timepiece parts by means of a repositionable hot melt adhesive, wherein said timepiece parts are held together in assembled position when said adhesive is at a temperature T_{A} and can be repositioned in relation to one another when said adhesive is heated to a temperature T_{C}, comprising the steps of:
a) preparing a solution of an adhesive comprising at least one formulation having the form of a mixture of block copolymer chains comprising at least a first polymer block having a glass transition temperature Tg or a melting temperature Tf ranging between 40°C and 200°C, and at least a second polymer block comprising at least pendant diene units X and having a glass transition temperature Tg or a melting temperature Tf lower than a temperature T_{DA}, and of coupling molecules comprising at least two dienophile end groups Y, wherein said X units and said Y groups are arranged to be able to react with one another and to bond together by means of the Diels-Alder reaction at a temperature T_{DA} and to be able to regenerate by means of the retro-Diels-Alder reaction at a temperature T_{RDA},
where T_{A} < T_{RDA} ≤ T_{C}, wherein temperature T_{DA} ranges between 0°C and 100°C, preferably between 25°C and 70°C, and temperature T_{RDA} ranges between 50°C and 200°C, preferably between 80°C and 150°C, and T_{DA} is strictly lower than T_{RDA}, and temperature Tc is higher than the glass transition temperature Tg or the melting temperature Tf of the first polymer block,
b) applying the solution of said adhesive to the timepiece parts
c) drying
d) placing the timepiece parts at a temperature higher than or equal to the glass transition temperature Tg or the melting temperature Tf of the first polymer block to reposition the timepiece parts
e) cooling to a temperature lower than or equal to the glass transition temperature Tg or the melting temperature Tf of the first polymer block,
f) placing the timepiece parts at a temperature higher than or equal to temperature T_{DA} and lower than T_{RDA} to link the block copolymer chains to one another by means of the coupling molecules by the Diels-Alder reaction so that the adhesive is in the form of a three-dimensional network
g) heating said timepiece parts to the temperature T_{C} to regenerate the mixture of block copolymer chains and of coupling molecules by means of the retro-Diels-Alder reaction
h) repositioning the timepiece parts
i) duplicating steps e) to f)
j) if necessary, repeating steps g) to i) as many times as required to reposition the timepiece parts again.

17. Use of a repositionable hot melt adhesive to hold at least two timepiece parts together in an assembled position when said adhesive is at a temperature T_{A} and to reposition them in relation to one another when said adhesive is heated to a temperature T_{C}, wherein said adhesive comprises at least one formulation, which:
- at the temperature T_{C} has the form of a mixture of polymer chains comprising at least pendant diene units X and of coupling molecules comprising at least two dienophile end groups Y, wherein said X units and said Y groups are arranged to be able to react with one another and to bond together by means of the Diels-Alder reaction at a temperature T_{DA} and to be able to regenerate by means of the retro-Diels-Alder reaction at a temperature T_{RDA},
- at a temperature T_{A} has the form of a three-dimensional network, in which the polymer chains are linked to one another by the coupling molecules by means of the Diels-Alder reaction,
where T_{A} < T_{RDA} ≤ T_{C}
where temperature T_{DA} ranges between 0°C and 100°C, preferably between 25°C and 70°C, and temperature T_{RDA} ranges between 50°C and 200°C, preferably between 80°C and 150°C, and T_{DA} is strictly lower than T_{RDA}.

18. Timepiece part comprising an assembly of two timepiece parts assembled together by means of a repositionable hot melt adhesive according to one of claims 1 to 14.
